# EUROPEAN PATENT SPECIFICATION

(11) **EP 2 784 359 B1**
(45) Date of publication and mention of the grant of the patent: **31.08.2016**
(21) Application number: 14154147.4
(22) Date of filing: 06.02.2014
(51) Int. Cl.: F16K 3/02, F16L 41/04, F16L 41/06, F16K 27/02, F16K 27/04

(54) **Movable valve for pipe fitting**
Bewegliches ventil für rohranschluss
Soupape mobile pour raccord de tuyau

(30) Priority: 07.02.2013 IT MI20130170
(43) Date of publication of application: 01.10.2014
(73) Proprietor: Greiner S.p.A., 25065 Lumezzane (BS) (IT)
(72) Inventor: Lena, Roberto, I-25065 Lumezzane (BS) (IT); Astori, Giorgio, I-25065 Lumezzane (BS) (IT)
(74) Representative: Marietti, Andrea

(56) References cited:
- GB-A- 2 044 410
- US-A1- 2005 184 514
- US-A1- 2008 083 267
- US-A1- 2008 276 859

## Description

### FIELD OF THE INVENTION

The present invention refers to the shut-off valve field used to stop, at least temporarily, a fluid flow passing in a branch pipe obtained by a pipe fitting.

### KNOWN PREVIOUS ART

As a matter of fact, in order to inspect or carry out maintenance or repair operations of piping sections, it is known to carry out one or more holes spaced one from another on the piping and then to apply pipe fittings next to the holes, the pipe fittings ending into respective valves for temporarily intercept the flow coming from these holes. As inspection or repair operations carry on, tools for operating on the piping are applied on these valves or by-pass ducts are connected that can be obviously used only after the afore said valves have been opened.

Therefore such valves, typically with a flat shutter, have to allow the connection and the disconnection in a safe way of tools for operating on a piping, for example a shutter change block to stop the flow in the piping and, in case, for the subsequent connection of a by-pass, and they also have to be able to allow their quick activation, that is their quick opening/closing, and to allow an effective flow sealing.

For the above mentioned object, mainly in gas pipelines, it is known to use plate valves, or knife valves (flat), also mentioned as slide valves, which are valves provided with a side slit equipped with special gaskets, in which a shutting-off plate can be inserted usually by hand, in case provided with a respective handgrip. The valve, having a substantially cylindrical shape, can be fastened at one base thereof to the pipe fitting, and it comprises an opening at the opposite base, inside which tools and/or additional pipes can be fastened to define a by-pass diversion, and it has the afore said slit for the shutting-off plate, extended orthogonally to the symmetry axis, obtained along its side surface.

Typically, the fastening of the valve to the pipe fitting happens through the cooperation of two threads, one on the pipe fitting and the corresponding one on the valve. In other words the valve is screwed on the pipe fitting. Such a condition, obviously because of the thread lengths, does not allow the user to select the final angular position of the slit for the insertion of the shutting-off plate. Then it is possible that, at the end of the screwing step, the slit is in such a position that the insertion of the shutting-off plate could become difficult, if not impossible, for example when there are obstacles placed just in front of the slit. Such a situation is evidently uncomfortable for the operator, being hampered his operation directly and comfortably on the valve.

To compensate for such a drawback, solutions providing the presence of two or more angularly spaced slits on the slide valves are known, for the alternative insertion of the shutting-off plate.

However such a solution, in addition to be difficult to realize and to entail the use of special gaskets for assuring also the fluidic sealing of slits not engaged in the shutting-off plate, when the latter is inserted in the valve, does not allow anyway to freely position one of the slits for the shutting-off plate in the placement more suitable for the insertion of the latter.

GB2044410 discloses a valve comprising two body halves provided with a flat surface, and which are constrained at a distance one from another to form said valve. A space for the insertion of a plate is provided between the flat surfaces of the two body halves constrained one to another. The two body halves have to be provided with lugs and interstices, complementary shaped and arranged on both said body halves, so that they can be connected together by a pin passing through holes provided on said lugs.

US2008/276859 discloses a pipeline signal provided with an indicator assembly (having a flag) controlled by a trigger mechanism and fixed on a plug assembly.

US2005/0184514 discloses a swivel adaptor for liquid tanks, and in particular of gasoline. The adaptor comprises a base and an intermediate swivel section. The lower part of the base has an internal thread, while the upper part is adapted to be surmounted by the intermediate swivel section.

US2008/083267 discloses a leak testing device comprising a coupling in the form of a cylindrical body which define therein a recess and two opening to which conduit end portions to be tested are fitted.

Object of the present invention is to solve the problems of the known art and to avoid accidental disassembling of the valve during its positioning and operation.

A further object of the present invention is to realize a pipe fitting valve, allowing the operator to use it correctly and simply in every use condition.

### SUMMARY OF THE INVENTION

These and other objects are obtained by the present invention through a valve for pipe fitting, comprising a first element for the passage of a fluid provided with means for the fastening to the pipe fitting, and a second element for the passage of a fluid, constrained at least rotationally with respect to the first element and with fluidic continuity with the latter, and means for shutting-off at least temporarily the fluidic passage through at least the afore said second element. Such shutting-off means comprise a removable shutting-off plate and a slit, on the side surface of the second element, conveniently and preferably provided with at least two mating sealing gaskets that ensure the fluidic sealing thereof, inside which such a shutting-off plate can be removably inserted. The valve further comprises positioning and retaining means adapted to reversibly prevent the second element from moving with respect to the first element.

Thanks to the present invention, it is possible to move the second element of the valve, i.e. the valve portion provided with shutting-off means that control the opening and the closing of the valve itself, in the preferred operative position, so that to allow an easy and effective use.

In fact, once the first fluid passage element has been constrained - for example - to a branch pipe-fitting, the operator is free to rotate the second element of the valve with respect to the first one, until the slit for the shutting-off plate is moved to the most convenient position to allow the insertion of the shutting-off plate itself.

According to an aspect of the present invention, the rotation between the first element and the second element happens around an axis parallel to, or coincident with, the fluid flow direction in the first and second elements. Preferably, the rotation between the first element and the second element happens around an axis parallel with, or coincident to, the fluid flow direction in the second element on which the slit for the shutting-off valve is placed. Therefore, the positioning and retaining means are usually used after the positioning and the closing of the second element of the valve in the preferred position, so that this element holds its position with respect to the first element.

According to a preferred aspect of the present invention, the afore said positioning and retaining means comprise manual controlling means, adapted to selectively define a stable decoupling or coupling position between the first and the second fluid passage elements, each of which comprises at least one manual activating knob for an active component constrained to said second element of the valve and engageable removably and compressively (with a compression action) on the afore said first element.

Such controlling means can be used after the positioning of the second element and before the valve closing. The afore said manual controlling means are preferable composed of manually-controlled threaded elements that, screwed by means of activating knobs in holes of the first element of the valve, engage under pressure (by exerting a pressure) the second element of the valve and assure a quick and effective fastening of such a first and second element in the selected position.

According to another preferred aspect of the present invention, the first element and the second element for fluid passage are components with a substantially cylindrical geometry and they are constrained one to another coaxially, one surmounting the other at least partially. According to an aspect of the present invention, the first and second element are components with a substantially cylindrical geometry and the rotation between the first element and the second element happens around the axis of the first and the second element with a substantially cylindrical geometry.

With such a shape, the valve can preferably provide that the afore said slit for the shutting-off plate is placed between the surmounted end of the first element and the corresponding zone of the second element and that the afore said two annular mating gaskets are housed on the first and the second element, respectively, of the valve fluid passage.

In a preferred embodiment of the present invention, with the afore described shape, the first and the second elements are constrained one to another only in reciprocal rotation by the use of threaded elements that, engaged in corresponding threaded holes of the second element of the valve, engage in a circular groove of the first element so that to prevent the axial translation between these elements, although allowing their free relative rotation.

The present invention concerns a method for using the afore described valve with a pipe fitting, and particularly a method for fluidically closing a pipe fitting by means of a valve comprising a first element for the passage of a fluid provided with means for the fastening to the pipe fitting, and a second element for the passage of a fluid, constrained at least rotationally to the first element and with fluidic continuity with the latter, and means for shutting-off at least temporarily the fluidic passage through said second element, wherein the shutting-off means comprise at least one shutting-off plate and a slit on the side surface of the second element, and the valve further comprises positioning and retaining means adapted to reversibly prevent the second element from moving with respect to the first element, comprising the steps of:
a. installing a pipe fitting on a piping in a known way;
b. constraining the first element for the fluid passage to the pipe fitting;
c. coupling the second element for the fluid passage to the first element, with a constraint at least of relative rotation;
d. moving, at least rotationally, the second element with respect to the first element;
e. operating said positioning and retaining means to prevent said second element from moving with respect to said first element
f. operating the shutting-off means to stop or allow the fluidic communication at least through the afore said second element.

It has to be noticed that the last two steps e) and f) of the above reported method can be interchanged and then arranged in a reversed temporal succession.

According to an aspect of the present invention, the method comprises the step of regulating the relative angular position between the first element and the second element so that during use the slit is in the optimal position, preferably the step of regulating the angular position is carried out before steps d) and e) are carried out. According to an aspect of the present invention, the method provides the use of a valve having the afore said positioning and retaining means that comprise at least manual controlling means, adapted to selectively define a stable decoupling or coupling position between the first element and the second element, and further comprising the step of:
d1. manually operating the controlling means to defme a reversible stable coupling position between the first and the second element.

### BRIEF DESCRIPTION OF THE FIGURES

Referring to figures, an exemplary, non-limiting, embodiment of the present invention will be described, wherein:

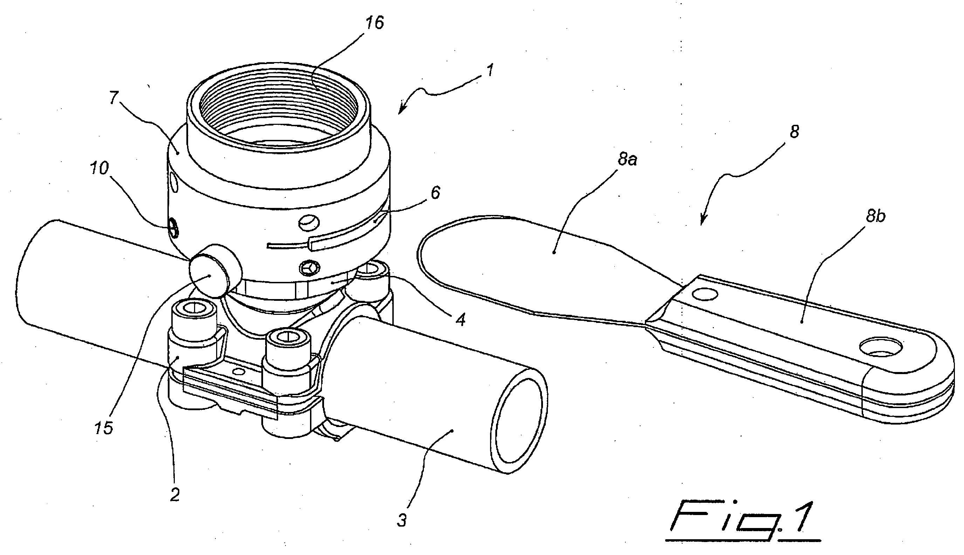

- figure 1 is a perspective view of a valve in an operative condition according to the present invention;
- figure 2 is an exploded view of the valve components of Figure 1;
- figure 3 is a side view of the valve of Figure 1;
- figure 4 is a front view of the valve of Figure 1;
- figure 5 is a section view along the axis A-A of figure 4;
- figure 6 is a section view of the valve of figure 1, in an operative condition and coupled with another tool.

### DETAILED DESCRIPTION OF AN EMBODIMENT OF THE PRESENT INVENTION

Referring to figures, a valve 1 for a pipe fitting 2 of a piping 3 comprises a first element 4 for the passage of a fluid, provided with means 5 for the fastening to the pipe fitting 2, a second element 7 for the passage of the fluid and constrained, thanks to means 9, 10 described below, at least rotationally to the first element 4 and with fluidic continuity with the latter, so as to define a passage therethrough for the fluid itself, and means 6, 8 for at least temporarily shutting-off the fluidic passage through the valve 1.

Such shutting-off means comprise a removable shutting-off plate 8 and a slit 6, conveniently provided with at least two mating sealing gaskets 12, 13 that ensure the fluidic sealing thereof, inside which the shutting-off plate 8 can be removably inserted.

The valve 1 further comprises positioning and retaining means 15 adapted to reversibly prevent, preferably in a stable way, the second element 7 from moving with respect to the first element 4.

In the embodiment shown in figures, the first element 4 is a hollow cylindrical element provided with a limited height, taking a substantially annular shape, whereas also the second element 7 of the valve 1 is an element having a substantially cylindrical shape with a variable section along its own axis.

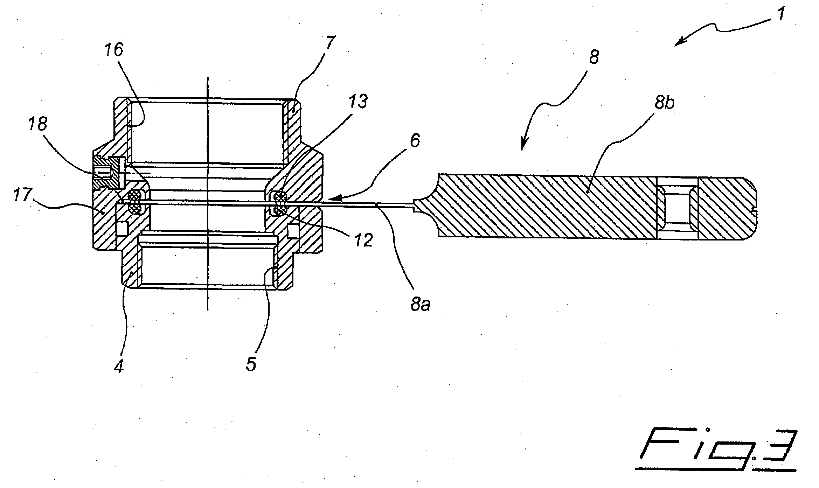

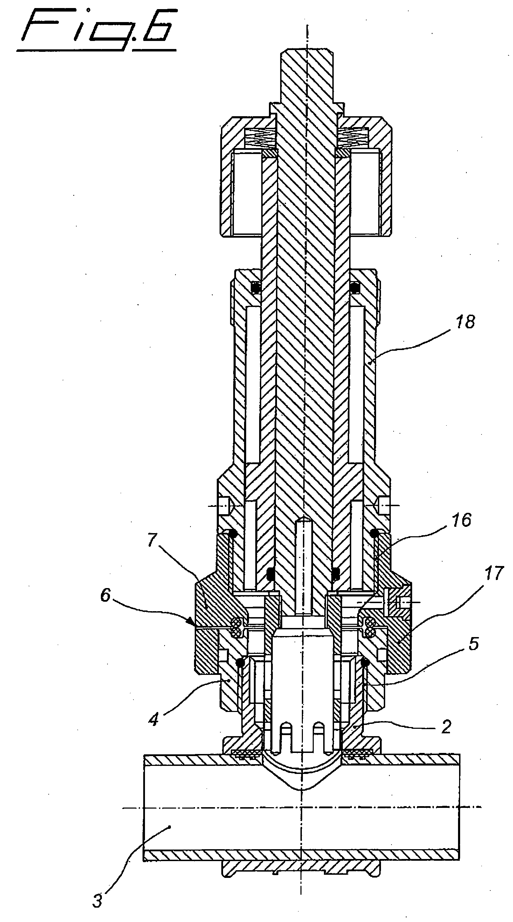

As can be seen in figures 3 and 6, the fastening means 5 of the first element 4 to the pipe fitting 2 are made by means of a thread, arranged at one of the two base openings of the hollow cylinder consisting of the first element 4, the thread being designed so as to screw, because of its pitch and thread sizes, in a corresponding thread (nut thread) present on the pipe fitting 2. It has to be observed that between the first element 4 of the valve 1 and the pipe fitting 2 a gasket is interposed to guarantee the fluidic sealing between the two components.

It has to be noticed as well that, as can be seen in figures, the first element 4 of the valve 1 further provides for the presence of a side circular, or annular, groove 9 whose function will be cleared hereinafter.

Preferably, in the embodiment of the valve 1 according to the present invention herein shown, in the first element 4 a seat 11 for an annular gasket 12 is perimetrically obtained substantially on the base opposite to the base coupling with the pipe fitting 2, the seat being adapted to cooperate with the afore said slit 6 for the shutting-off valve 8. Another gasket 13 can be accommodated in the second element 7 and cooperates with the gasket 12 so as to guarantee the fluidic sealing of the slit 6, as will be detailed hereinafter.

The second element 7 that is, as mentioned, in its turn shaped as a hollow cylinder with a variable section, has the slit 6 for the insertion of the plate 8 on the side surface.

Such a slit 6 has a small cross dimension, i.e. a limited thickness, to avoid undue interferences between the shutting-off plate 8 and the annular gaskets 12 and 13 (O-ring), when such a plate 8 is inserted into the slit 6 and also has outer beveled edges serving as an entry for the plate 8, by aiding the insertion thereof.

It has to be noticed that the shape of the second element 7 is such to allow its coupling, although by an only-rotational constraint with fluidic sealing, with the first element 4 of the valve 1, so that the first element is at least partially surmounted and the slit 6 can be positioned at the two afore said annular gaskets 12 and 13, that are mating one to another when the first and the second elements 4, 7 of the valve 1 are constrained one to another.

More in detail, as can be seen in figure 3, the second element 7 has a seating 18 in the inside acting as a limit for the first element 4, whereas a portion of the same element 7 shaped as a cylindrical flange 17 is adapted to partially surround the first element 4 when the two element 4, 7 are operatively coupled.

The constraining means between the first element 4 and the second element 7 comprise the afore said annular groove 9 obtained on the outer surface of the first element 4 of the valve 1 and a plurality of threaded elements 10 that, once inserted in corresponding threaded holes 14 obtained on the side surface of the second element 7, engage in such a groove 9 thereby preventing the reciprocal translation of the two elements 4, 7 while allowing their free relative rotation.

The exact positioning of the holes 14 of the second element 7 at the groove 9 of the first element 4, when these elements are coupled, is assured by the afore said seating 18 of the second element 7 acting as a limit for the upper base of the first element 4 of the valve 1.

Particularly, it has to be observed that the threaded elements 10 realizing the constraint between the two elements 4, 7 of the valve 1 are threaded grub screws screwable thanks to a specific key, preferably provided with a polygonal head and locked in position with specific thread-stops.

The shape shown in figures of the first and the second element 4, 7 allows *de facto* the only regulation of the relative angular position between the two elements, i.e. such a regulation whereby the second element 7 is rotationally movable with respect to the first element 4. Notwithstanding this, because of the fluidic sealed constraint between the two elements 4 and 7, i.e. the achievement of a passage with fluidic continuity between the two elements, the possibility of a relative axial regulation between such two elements 4, 7 is not excluded.

In addition, although the use of threaded elements 10 engaged in a respective groove 9 for realizing the rotational constraint between the first and the second element 4, 7 of the valve 1 has been described above, every other constraint allowing at least the relative rotation, such as for example the engagement of pins forced into the second element 7 and loosely engaged in the groove 9, can be equally used.

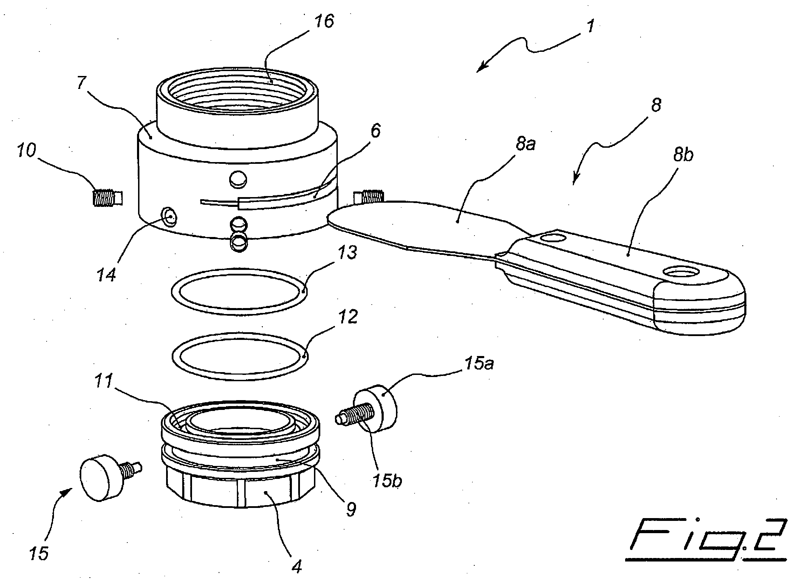

In the herein shown embodiment, the afore said positioning and retaining means comprise manually-operated controlling means 15 constrainable to the afore said holes 14 and comprising a control knob 15a and a threaded portion 15b (it has to be noticed that these reference numbers are used in detail in figure 2, on the contrary in remaining figures the general numeral reference 15 is used for visualization easiness).

More in general, the threaded portion 15b of such means 15 is an active component removably constrained to the second element 7 of the valve . 1 that, when conveniently operated by the respective knob 15a, engages removably and compressively on the afore said first element 4.

As a matter of fact, in the embodiment of the present invention herein described, the threaded portion 15b of the means 15 is adapted to be engaged in the respective thread of one of the openings 14 and, operated by the control knob 15a, being adapted to be easily grasped by an operator, is compressively and evidently reversibly engaged with the first element 4 of the valve 1, preferably in the groove 9 of the first element.

The manual controlling means 15 can be used to make a stable engagement between the first and the second element 4, 7 after their reciprocal angular position has been determined, i.e. to quickly realize a connection between the two elements 4, 7 that is stable and easy to carry out and in case to eliminate, although reversible.

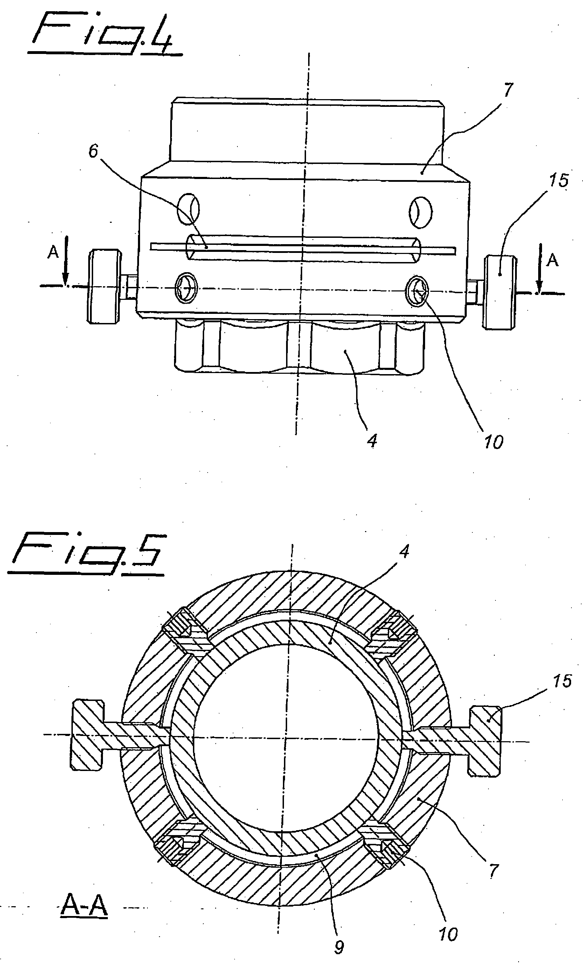

In particular, these threaded elements 15b of the manual controlling means 15 are adapted to be inserted in respective threaded openings 14 placed on the side surface of the second element 7 and, once screwed, they are compressively engaged in the groove 9 of the first element 4 of the valve 1. The threaded elements 15b, as can be seen in the section of figure 5, once inserted into the respective openings 14 and screwed thanks to the respective knobs 15a, apply such a pressure against the groove 9 of the first element 4 to avoid every relative movement between the first and the second element 4, 7.

It has to be noticed that, in the embodiment of the present invention herein shown, the controlling means 15 use the same openings 14 of the constraining means 10. The thread of the controlling means 15 can be anyway different from the thread of the constraining means 10 and, consequently, it is possible to have different openings instead of having common openings 14, as well as different types of handgrips 15a can be provided in place of the illustrated knobs, or other means allowing an operator to manually activate such controlling means 15.

It has to be observed that, on top, the opening of the second element 7 preferably has an inner thread 16 allowing the valve 1 to operatively couple with other tools, such as the tool 18 shown in figure 6, or with by-pass ducts.

The shutting-off plate 8, although separable from the elements 4, 7, is part of the valve 1. The plate 8 is known in the art and has a thin portion 8a, usually made of metal, adapted to be inserted into the slit 6 among the gaskets 12, 13 and a handgrip, or knob, 8b.

In figure 6 the coupling of the first element 4 with the pipe fitting 2 and of a tool 18, which is not an object of the present invention, to the second element 7 is visible, through the threads 5 and 16, respectively.

In use, firstly an operator installs the pipe fitting 2 on a piping 3 in a known way. Then, through the fastening means 5, i.e. thanks to the coupling of the thread 5 with a respective thread of the pipe fitting 2, he constrains the first element 4 to the pipe fitting 2. Later on, the operator couples the second element 7 with the first element 4 of the valve 1, and particularly he leans the second element 7 on the first element 4 so that the first element 4 is introduced into the second element 7 for the whole available travel, i.e. until the seating 18 has been reached.

Then the operator, thanks to the screwing of the grub screws 10 in the holes 14 of the second element 7 with the annular groove 9 of the first element 4 of the valve 1, makes an only-rotational constraint that is fluidically sealed, i.e. able to guarantee the fluidic continuity between the first and the second element 4, 7 of the same valve 1. Once these elements 4, 7 have been rotationally constrained, it is possible to rotationally move the second element 7 with respect to the first element 4. In particular, in the herein shown embodiment, it is possible to rotate the second element 7 on the first element 4 up to place the slit 6 in an optimal use position.

Then it is possible to operate, thanks to the knobs 15a, the positioning and retaining means 15 comprising the afore said manual controlling means, by screwing the respective threaded portions 15b of such manual controlling means in the respective openings 14 until said threaded portions 15b compressively engage the bottom of the annular groove 9 and thereby avoid, stably but reversibly, the movement of the second element 7 with respect to the first element 4.

Afterwards, it is possible to operate the shutting-off means 6, 8 in order to stop the fluidic communication inside the valve 1, at least inside the second element 7, particularly by the insertion of the plate 8a into the slit 6 between the gaskets 12, 13. The coupling of the plate 8a with the gaskets 12 and 13 guarantees the fluidic sealing.

However it is possible to reverse the use order of the positioning and retaining means 15 with the insertion step of the plate 8a into the slit 6, without thereby departing from the object of the present invention.

Furthermore, it is possible to provide also the use of the controlling means 5, typically before carrying out the fluidic interruption, so that to define the loose coupling between the two elements 4, 7, so that such a coupling could be temporary and quickly removed.

In particular, until an optimal position of the slit 6 has been found, the operator can use the controlling means 5 to temporarily hold and assess a determined position of the second element 7, in order to be able to use later the means for the stable positioning to hold the second element 7 in its definitive position.

## Claims

1. Valve (1) for pipe fitting (2), comprising a first element (4) for the passage of a fluid provided with means (5) for the fastening to said pipe fitting, and a second element (7) for the passage of a fluid, and with fluidic continuity with the latter, and means for shutting-off at least temporarily the fluidic passage through said valve (1), wherein said shutting-off means comprise at least one removable shutting-off plate (8) and a respective slit (6) inside which said plate can be inserted, **characterized in that** said second element (7) is constrained at least rotationally to said first element (4) and said slit (6) is located on the side surface of said second element (7), said valve (1) further comprising positioning and retaining means (15) to reversibly prevent said second element (7) from moving with respect to said first element (4).

2. Valve according to claim 1, wherein said positioning and retaining means comprise manual controlling means (15), each of which comprising at least one manual activating knob (15a) for an active component constrained to said second element (7) and engageable removably and compressively on said first element (4) of the valve (1).

3. Valve according to claim 2, wherein each of said manual controlling means (15) comprises at least one threaded element (15b), operated by said at least one knob (15a), said at least one threaded element (15b) engaging inside threaded holes (14) of said second element (7) and, once screwed, reversibly and compressively engaging with said first element (4).

4. Valve according to any one of the preceding claims, wherein said slit (6) internally comprises at least two mating sealing gaskets (12, 13).

5. Valve according to any one of the preceding claims, wherein said first and said second element (4, 7) of said valve (1) are components with a substantially cylindrical geometry, and they are shaped to surmount themselves at least partially when reciprocally coupled.

6. Valve according to any one of the preceding claims, wherein said first and said second elements (4, 7) are coaxially constrained one to another.

7. Valve according to claims 4 to 6, wherein said at least two gaskets (12, 13) are each housed on one of said first and second element (4, 7) of the valve (1), respectively.

8. Valve according to any one of the preceding claims, comprising means for the reciprocal and only rotationally constraint of said first and said second element (4, 7) of the valve (1).

9. Valve according to claim 8, wherein said means for the only rotationally constraint comprise, between the first element (4) and the second element (7), an annular groove (9) of said first element (4) and a plurality of threaded elements (10) that can be inserted in corresponding threaded holes (14) of said second element (7), and which are engaged in said groove (9) in order to prevent the reciprocal translation of the first and the second element (4, 7), although allowing the free relative rotation thereof.

10. Valve according to any one of the preceding claims, wherein said second element (7) is constrained at least rotationally to said first element (4) for regulating the relative angular position between said first element (4) and said second element (7) so that during use said slit (6) is in the optimal position.

11. Valve according to any one of the preceding claims, wherein the rotation between said first element (4) and said second element (7) happens around an axis parallel to, or coincident with, the fluid flow direction in said first and second element (4, 7).

12. Valve according to any one of the preceding claims, wherein said first and said second elements (4, 7) of said valve (1) are components with a substantially cylindrical geometry and the rotation between said first element (4) and said second element (7) happens around the axis of said first and said second element (4, 7) with a substantially cylindrical geometry.

13. Method for fluidically closing a pipe fitting by means of a valve comprising a first element (4) for the passage of a fluid provided with means (5) for the fastening to said pipe fitting, and a second element (7) for the passage of a fluid, constrained at least rotationally to said first element (4) and with fluidic continuity with the latter, and means for shutting-off at least temporarily the fluidic passage through said valve (1), wherein said shutting-off means comprise at least one removable shutting-off plate (8) and a respective slit (6) on the side surface of said second element (7), inside which said plate can be inserted, said valve (1) further comprising positioning and retaining means (15) to reversibly prevent said second element (7) from moving with respect to said first element (4), the method comprising the steps of:
a. installing a pipe fitting on a piping in a known way;
b. constraining said first element (4) to the pipe fitting;
c. coupling said second element to said first element, with a constraint at least of relative rotation;
d. operating said positioning and retaining means to prevent said second element (7) from moving with respect to said first element (4);
e. operating the shutting-off means to stop the fluid passage inside said valve (1);
and wherein said steps d) and e) can be inverted temporarily one to another.

14. Method according to claim 13, wherein said valve comprises controlling means, adapted to selectively define a decoupling or loosely coupling position between said first element and said second element, comprising the step of:
d1. manually operating the controlling means to define a reversible stable coupling position between said first and second element.

15. Method according to claim 13 or 14, comprising the step of regulating the relative angular position between said first element (4) and said second element (7) so that during use said slit (6) is in the optimal position, preferably said step of regulating the angular position is carried out before steps d) and e) are carried out.

## Patentansprüche

1. Ventil (1) für ein Rohrfitting (2), umfassend ein erstes Element (4) für den Durchtritt einer Flüssigkeit mit Mitteln (5) für die Befestigung an dem Rohrfitting, und einem zweiten Element (7) für den Durchtritt einer Flüssigkeit, und mit einem fluidischen Anschluss mit dem letzteren, und Mitteln zum wenigstens temporären Absperren des fluidischen Durchtritts durch das Ventil (1), wobei die Absperrmittel wenigstens eine entfernbare Absperrplatte (8) umfassen und einen jeweiligen Schlitz (6), in welchen die Platte eingesetzt werden kann, **dadurch gekennzeichnet, dass** das zweite Element (7) wenigstens rotationsbeschränkt zu dem ersten Element (4) ist und der Schlitz (6) an der Seitenfläche des zweiten Elementes (7) angeordnet ist, wobei das Ventil (1) ferner Positionierungs- und Haltemittel (15) zum reversiblen Verhindern, dass sich das zweite Element (7) in Bezug auf das erste Element (4) bewegt, umfasst.

2. Ventil nach Anspruch 1, wobei die Positionierungs- und Haltemittel manuelle Steuerungsmittel (15) umfassen, von denen jedes mindestens einen Handbetätigungsknopf (15a) für eine aktive Komponente umfasst, welche beschränkt zu dem zweiten Element (7) und lösbar in Eingriff bringbar und zusammenpressend auf dem ersten Element (4) des Ventils (1) ist.

3. Ventil nach Anspruch 2, wobei jede der manuellen Steuerungsmittel (15) wenigstens ein Gewindeelement (15b) umfasst, welches durch den wenigstens einen Betätigungsknopf (15a) betrieben ist, wobei das wenigstens eine Gewindeelement (15b) innen in Eingriff mit Gewindebohrungen (14) des zweiten Elements (7) ist und, einmal fest geschraubt, lösbar in Eingriff bringbar und zusammenpressend mit dem ersten Element (4) ist.

4. Ventil nach einem der vorhergehenden Ansprüche, wobei der Schlitz (6) im Inneren wenigstens zwei zusammenpassende Dichtungen (12, 13) umfasst.

5. Ventil nach einem der vorhergehenden Ansprüche, wobei das erste und das zweite Element (4, 7) des Ventils (1) Bestandteile mit einer im Wesentlichen zylindrischen Geometrie sind, und sie derart geformt sind, dass sie sich wenigstens teilweise überragen, wenn sie wechselseitig gekoppelt sind.

6. Ventil nach einem der vorhergehenden Ansprüche, wobei das erste und das zweite Element (4, 7) koaxial zueinander beschränkt sind.

7. Ventil nach einem der Ansprüche 4 bis 6, wobei die wenigstens zwei Dichtungen (12, 13) jeweils auf einem des ersten und zweiten Elementes (4, 7) des Ventils (1) untergebracht sind.

8. Ventil nach einem der vorhergehenden Ansprüche, umfassend Mittel für die reziproke und einzige Rotationsbeschränkung des ersten und zweiten Elementes (4, 7) des Ventils (1).

9. Ventil nach Anspruch 8, wobei die Mittel für die einzige Rotationsbeschränkung, zwischen dem ersten Element (4) und dem zweiten Element (7), eine ringförmige Nut (9) des ersten Elementes (4) und eine Mehrzahl von Gewindeelementen (10), die in entsprechende Gewindebohrungen (14) des zweiten Elementes (7) eingesetzt werden können, und welche in Eingriff mit der Nut (9) sind, um die reziproke Translation des ersten und des zweiten Elementes (4, 7) zu verhindern, obwohl die freie relative Rotation dieser erlaubt wird, umfassen.

10. Ventil nach einem der vorhergehenden Ansprüche, wobei das zweite Element (7) wenigstens Rotationsbeschränkt zu dem ersten Element (4) ist, um die relative Winkelposition zwischen dem ersten Element (4) und dem zweiten Element (7) zu regulieren, so dass während der Benutzung der Schlitz (6) in der optimalen Position ist.

11. Ventil nach einem der vorhergehenden Ansprüche, wobei die Rotation zwischen dem ersten Element (4) und dem zweiten Element (7) um eine Achse, die parallel zu, oder koinzident zu der Flussrichtung der Flüssigkeit in dem ersten und dem zweiten Element (4, 7) ist, geschieht.

12. Ventil nach einem der vorhergehenden Ansprüche, wobei das erste und das zweite Element (4, 7) des Ventils (1) Komponenten mit einer im Wesentlichen zylindrischen Geometrie sind und die Rotation zwischen dem ersten Element (4) und dem zweiten Element (7) um eine Achse des ersten und des zweiten Elementes (4, 7) mit einer im Wesentlichen zylindrischen Geometrie geschieht.

13. Verfahren zum fluidischen Verschluss eines Rohrfittings mittels eines Ventils umfassend ein erstes Element (4) für den Durchtritt einer Flüssigkeit mit Mitteln (5) für die Befestigung an dem Rohrfitting, und ein zweites Element (7) für den Durchtritt einer Flüssigkeit, welches wenigstens rotationsbeschränkt zu dem ersten Element (4) ist und mit einem fluidischen Anschluss mit dem letzteren, und Mitteln zum wenigstens temporären Absperren des fluidischen Durchtritts durch das Ventil (1), wobei die Absperrmittel wenigstens eine entfernbare Absperrplatte (8) umfassen und einen jeweiligen Schlitz (6) an der Seitenfläche des zweiten Elementes (7), in welchen die Platte eingesetzt werden kann, wobei das Ventil (1) ferner Positionierungs- und Haltemittel (15) zum reversiblen Verhindern, dass sich das zweite Element (7) in Bezug auf das erste Element (4) bewegt, umfasst, das Verfahren die folgenden Schritte umfasst:
a. Installieren eines Rohrfittings auf einer Rohrleitung in einer bekannten Weise;
b. Beschränken des ersten Elementes (4) zu dem Rohrfitting;
c. Koppeln des zweiten Elementes an das erste Element, mit einer Beschränkung wenigstens einer relativ zueinander gerichteten Rotation.
d. Betreiben der Positionierungs- und Haltemittel um eine Bewegung des zweiten Elementes (7) in Bezug zu dem ersten Element (4) zu verhindern;
e. Betreiben der Absperrmittel, um den Durchtritt von Flüssigkeit innerhalb des Ventils (1) zu stoppen; und wobei die Schritte d) und e) temporär gegeneinander invertiert werden können.

14. Verfahren nach Anspruch 13, wobei das Ventil Steuerungsmittel umfasst, die angepasst sind, um selektiv eine Entkopplung oder lose Kopplungsposition zwischen dem ersten Element und dem zweiten Element definieren, umfassend den folgenden Schritt:
d1. manuelles Betreiben der Steuerungsmittel, um eine reversible starre Kupplungsposition zwischen dem ersten und zweiten Element zu definieren.

15. Verfahren nach Anspruch 13 oder 14, umfassend den Schritt des Regulierens der relativen Winkelposition zwischen dem ersten Element (4) und dem zweiten Element (7), so dass während der Benutzung der Schlitz (6) in der optimalen Position ist, wobei vorzugsweise der Schritt des Regulierens der Winkelposition vor den Schritten d) und e) durchgeführt wird.

## Revendications

1. Valve (1) pour un raccord de tuyau (2), comprenant un premier élément (4) pour le passage d'un fluide, doté de moyens (5) pour la fixation audit raccord de tuyau, et un second élément (7) pour le passage d'un fluide, et avec une continuité fluidique avec ce dernier, et des moyens pour obturer au moins temporairement le passage fluidique par ladite valve (1), dans laquelle lesdits moyens d'obturation comprennent au moins une plaque d'obturation amovible (8) et une fente respective (6), à l'intérieur de laquelle ladite plaque peut être insérée, **caractérisée en ce que** ledit second élément (7) est contraint au moins en rotation sur ledit premier élément (4) et ladite fente (6) est située sur la surface latérale dudit second élément (7), ladite valve (1) comprenant en outre des moyens de positionnement et de retenue (15) pour empêcher de manière réversible ledit second élément (7) de se déplacer par rapport audit premier élément (4).

2. Valve selon la revendication 1, dans laquelle lesdits moyens de positionnement et de retenue comprennent des moyens de commande manuelle (15), dont chacun comprend au moins un bouton (15a) à activation manuelle pour un composant actif contraint sur ledit second élément (7) et engageable de manière amovible et par compression sur ledit premier élément (4) de la valve (1).

3. Valve selon la revendication 2, dans laquelle chacun desdits moyens de commande manuelle (15) comprend au moins un élément fileté (15b) actionné par ledit au moins un bouton (15a), ledit au moins un élément fileté (15b) s'engageant dans les trous filetés (14) dudit second élément (7) et une fois vissé, s'engageant de manière réversible et par compression avec ledit premier élément (4).

4. Valve selon l'une quelconque des revendications précédentes, dans laquelle ladite fente (6) comprend en interne au moins deux joints étanches correspondants (12, 13).

5. Valve selon l'une quelconque des revendications précédentes, dans laquelle ledit premier et ledit second élément (4, 7) de ladite valve (1) sont des composants avec une géométrie sensiblement cylindrique et ils sont formés pour se surmonter au moins en partie lorsqu'ils sont réciproquement couplés.

6. Valve selon l'une quelconque des revendications précédentes, dans laquelle ledit premier et ledit second éléments (4, 7) sont contraints coaxialement l'un sur l'autre.

7. Valve selon l'une quelconque des revendications 4 à 6, dans laquelle lesdits au moins deux joints (12, 13) sont logés respectivement chacun sur un desdits premier et second éléments (4, 7) de la valve (1).

8. Valve selon l'une quelconque des revendications précédentes, comprenant des moyens pour la contrainte réciproque et seulement rotative desdits premier et second éléments (4, 7) de la valve (1).

9. Valve selon la revendication 8, dans laquelle lesdits moyens pour la contrainte seulement rotative comprennent entre le premier élément (4) et le second élément (7), une rainure annulaire (9) dudit premier élément (4) et une pluralité d'éléments filetés (10) qui peuvent être insérés dans des trous filetés correspondants (14) dudit second élément (7) et qui sont engagés dans ladite rainure (9) afin d'empêcher la translation réciproque des premier et second éléments (4, 7) tout en permettant la rotation relativement libre de ceux-ci.

10. Valve selon l'une quelconque des revendications précédentes, dans laquelle ledit second élément (7) est contraint au moins en rotation sur ledit premier élément (4) pour réguler la position angulaire relative entre ledit premier élément (4) et ledit second élément (7) de sorte que pendant l'utilisation, ladite fente (6) soit dans la position optimale.

11. Valve selon l'une quelconque des revendications précédentes, dans laquelle la rotation entre ledit premier élément (4) et ledit second élément (7) se produit autour d'un axe parallèle ou coïncident à la direction de flux de fluide dans lesdits premier et second éléments (4, 7).

12. Valve selon l'une quelconque des revendications précédentes, dans laquelle ledit premier et ledit second éléments (4, 7) de ladite valve (1) sont des composants avec une géométrie sensiblement cylindrique et la rotation entre ledit premier élément (4) et ledit second élément (7) se produit autour de l'axe dudit premier et dudit second éléments (4, 7) avec une géométrie sensiblement cylindrique.

13. Procédé pour fermer fluidiquement un raccord de tuyau à l'aide d'une valve comprenant un premier élément (4) pour le passage d'un fluide, doté de moyens (5) pour la fixation audit raccord de tuyau, et un second élément (7) pour le passage d'un fluide contraint au moins en rotation sur ledit premier élément (4) et avec une continuité fluidique avec ce dernier, et des moyens pour obturer au moins temporairement le passage fluidique par ladite valve (1), dans lequel lesdits moyens d'obturation comprennent au moins une plaque d'obturation amovible (8) et une fente respective (6) sur la surface latérale dudit second élément (7), à l'intérieur de laquelle ladite plaque peut être insérée, ladite valve (1) comprenant en outre des moyens de positionnement et de retenue (15) pour empêcher de manière réversible ledit second élément (7) de se déplacer par rapport audit premier élément (4), le procédé comprenant les étapes de :
a. installation d'un raccord de tuyau sur une tuyauterie de manière connue ;
b. contrainte dudit premier élément (4) sur le raccord de tuyau ;
c. couplage dudit second élément audit premier élément avec une contrainte au moins de rotation relative ;
d. actionnement desdits moyens de positionnement et de retenue pour empêcher ledit second élément (7) de se déplacer par rapport audit premier élément (4) ;
e. actionnement des moyens d'obturation pour arrêter le passage fluidique dans ladite valve (1) ;
et dans lequel lesdites étapes d) et e) peuvent être inversées temporairement.

14. Procédé selon la revendication 13, dans lequel ladite valve comprend des moyens de commande adaptés pour définir sélectivement une position de découplage ou de couplage lâche entre ledit premier élément et ledit second élément, comprenant les étapes de :
d1. actionnement manuel des moyens de commande pour définir une position de couplage stable réversible entre lesdits premier et second éléments.

15. Procédé selon la revendication 13 ou 14, comprenant l'étape de régulation de la position angulaire relative entre ledit premier élément (4) et ledit second élément (7) de sorte que pendant l'utilisation, ladite fente (6) soit dans la position optimale, de préférence ladite étape de régulation de la position angulaire est réalisée avant que les étapes d) et e) ne soient réalisées.
